# EUROPEAN PATENT APPLICATION

(11) **EP 2 061 218 A1**
(43) Date of publication of application: **20.05.2009**
(21) Application number: 07121023.1
(22) Date of filing: 19.11.2007
(51) Int. Cl.: H04M 1/02

(54) **Parallelogrammic foldable cellphone**

(71) Applicant: Chiang, Akina, 221 Xizhi City, Taipei County (TW)
(72) Inventor: Chiang, Akina, 221 Xizhi City, Taipei County (TW)
(74) Representative: Beck & Rössig European Patent Attorneys

(57) **Abstract**

A parallelogrammic foldable cellphone (10) comprises four modular assemblies (20, 30, 40, 50) and four dual-spindle connecting blocks (60) jointed pivotally, wherein a connecting end with a connecting recess (B) and a pair of pivotal connecting parts (A1, A2) is disposed respectively on the upper side and lower side of each of the modular assemblies (20, 30, 40, 50), and the corresponding connecting recess (B) of the neighboring connecting ends of each two neighboring modular assemblies (20, 30, 40, 50) cooperatively receive one of the connecting blocks recess (B), and each spindle (70) of the connecting block (60) is pivotally connected to a pair of the pivotal connecting parts (A1, A2) of one of the two neighboring modular assemblies (20, 30, 40, 50) respectively for pivotally connecting the two neighboring modular assemblies (20, 30, 40, 50). Such structure makes the parallelogrammic foldable cellphone (10) capable of spreading and folding obversely or reversely to change the shape during usage.

## Description

### BACKGROUND OF THE INVENTION

### 1. Field of the Invention

The invention relates to a parallelogrammic foldable cellphone, and more particularly, to a parallelogrammic foldable cellphone capable of folding obversely or reversely to change the shape during usage.

### 2. Description of the Related Art

In the prior art, a foldable cellphone generally has a display module and a mainframe module, and the display module is pivotally connected with the mainframe module by a single spindle. Therefore, the foldable cellphone has advantages of being small in size and portable because the display module can lift 180 degree upwardly relatively to the mainframe module or cover the mainframe module.

Another conventional foldable cellphone also has a display module and a mainframe module; nevertheless, the display module and the mainframe module are respectively pivotally connected to each of the spindles of a dual-spindle connecting block. The display module of such foldable cellphone has an angle of usage adjustable from 0 to 360 degree, and more particularly, uses and functions of the foldable cellphone can be expanded and improved by folding reversely 360 degree of the display module to the back of the mainframe module.

Nevertheless, above-mentioned conventional cellphones are not capable of folding obversely or reversely to change the shape during usage.

### SUMMARY OF THE INVENTION

Therefore, one object of the present invention is to provide a parallelogrammic foldable cellphone comprising four modular assemblies and four dual-spindle connecting blocks jointed pivotally, wherein a connecting end having a connecting recess and a pair of pivotal connecting parts is disposed respectively on the upper side and lower side of each said modular assembly. The corresponding connecting recesses of the neighboring connecting ends of each two neighboring modular assemblies cooperatively receive one of the connecting blocks therein, and each spindle of the connecting block is pivotally connected to a pair of the pivotal connecting parts of one of the two neighboring modular assemblies. Such structure makes the parallelogrammic foldable cellphone capable of spreading and folding obversely or reversely to change the shape during usage.

Another object of the present invention is to provide a parallelogrammic foldable cellphone with a different structure comprising four modular assemblies and eight dual-axis hinges, wherein each dual-axis hinge has two parallel pivots. A pivotal connecting block is respectively protruded from the upper side and lower side of each modular assembly. A round slot is disposed respectively at two lateral faces of the pivotal connecting block for one of the pivots of the each dual-axis hinge to be disposed therein. The pivot of each dual-axis hinge is pivotally connected to one side of the pivotal connecting block constructing the neighboring connection of each modular assembly. Such structure makes the parallelogrammic foldable cellphone capable of spreading and folding obversely or reversely to change the shape during usage.

Still another object of the present invention is to provide a parallelogrammic foldable cellphone with a different structure comprising four modular assemblies, one or more connecting blocks and two or more dual-axis hinges jointed pivotally, wherein each connecting block has two spindles and each dual-axis hinge has two parallel pivots, and a connecting end with a connecting recess and a pair of pivotal connecting parts is disposed on one side of each pivotally connected neighboring modular assembly for a connecting block to be disposed in the connecting recess corresponding to each other. Each spindle of the connecting block is pivotally connected to the pivotal connecting part for constructing the pivotal connection of each neighboring modular assembly. The pivot of each dual-axis hinge is pivotally connected to one side of the pivotal connecting block constructing the neighboring connection of each modular assembly. Such structure makes the parallelogrammic foldable cellphone capable of spreading and folding obversely or reversely to change the shape during usage.

Wherein, the four modular assemblies can be modular assemblies with various or same function including a cellphone display module with a screen for displaying information, a cellphone mainframe module with information transmitting or receiving function and one or two modules selected from a power supply module, a memory module, a bluetooth module, a GPS module and a MP3 module. The dual-axis hinges of the connecting block can be extended with more electronic peripherals such as a voice receiver or transmitter, a digital camera lens or a USB socket.

### BRIEF DESCRIPTION OF THE DRAWINGS

FIG. 1 is a perspective view showing that the parallelogrammic foldable cellphone according to the first preferred embodiment of the present invention folds obversely to change the shape during usage;
FIG. 2 is a perspective view showing that the parallelogrammic foldable cellphone according to the first preferred embodiment of the present invention folds reversely to change the shape during usage;
FIG. 3 is a partly exploded view showing the parallelogrammic foldable cellphone according to the first preferred embodiment of the present invention;
FIG. 4 is a perspective view showing that the parallelogrammic foldable cellphone according to the first preferred embodiment of the present invention folds continuously in the same direction to change the shape during usage;
FIG. 5 is a perspective view showing that the parallelogrammic foldable cellphone according to the second preferred embodiment of the present invention folds obversely to change the shape during usage;
FIG. 6 is a perspective view showing that the parallelogrammic foldable cellphone according to the second preferred embodiment of the present invention folds reversely to change the shape during usage;
FIG. 7 is a partly exploded view showing the parallelogrammic foldable cellphone according to the second preferred embodiment of the present invention;
FIG. 8 is a perspective view showing that the parallelogrammic foldable cellphone according to the second preferred embodiment of the present invention folds continuously in the same direction to change the shape during usage;
FIG. 9 is a perspective view showing that the parallelogrammic foldable cellphone according to the third preferred embodiment of the present invention folds obversely to change the shape during usage;
FIG. 10 is a perspective view showing that the parallelogrammic foldable cellphone according to the third preferred embodiment of the present invention folds reversely to change the shape during usage; and
FIG. 11 is a perspective view showing that the parallelogrammic foldable cellphone according to the third preferred embodiment of the present invention folds continuously in the same direction to change the shape during usage.

### DETAILED DESCRIPTION OF THE PREFERRED EMBODIMENT

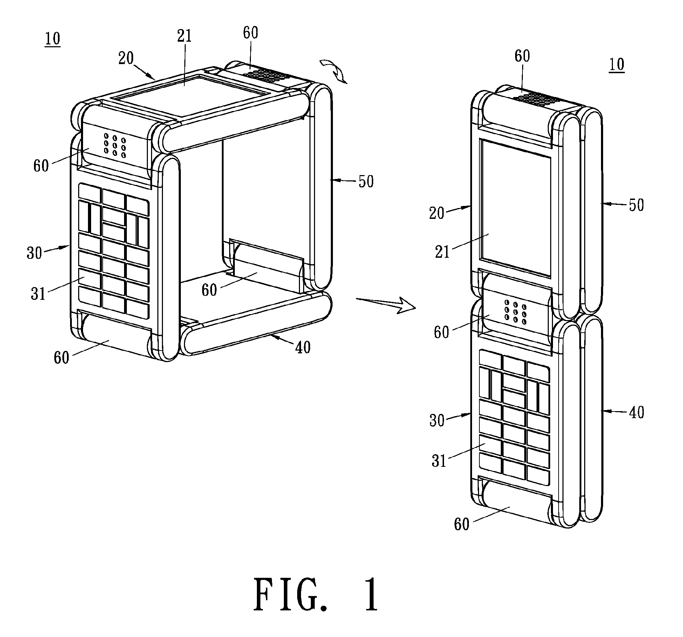

As shown from FIGs. 1 to 4, a parallelogrammic foldable cellphone 10 according to the first preferred embodiment of the present invention is composed of four modular assemblies and four connecting blocks 60 having two spindles 70 jointed pivotally, so that the parallelogrammic foldable cellphone 10 is capable of folding obversely or reversely to change the shape during usage.

Each said connecting block 60 has two pivotal holes 61 for respectively receiving a spindle 70 pivotally, thus each said connecting block 60 possesses a dual-spindle 70 structure.

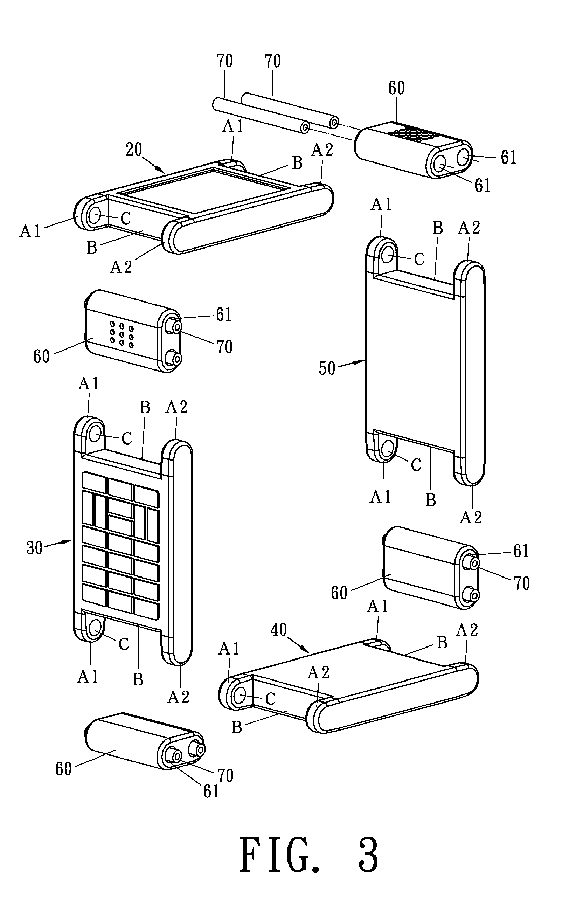

As shown from FIGs. 1 to 4, the four modular assemblies of the parallelogrammic foldable cellphone 10 include a first modular assembly 20, a second modular assembly 30, a third modular assembly 40 and a fourth modular assembly 50 in the sequence of the pivotal connection thereof. A connecting end formed on the upper side and lower side respectively of each modular assembly 20, 30, 40 and 50, has a connecting recess B and a pair of pivotal connecting parts A1 and A2. The connecting recess B is for the corresponding connecting block 60 to be pivotally disposed therein; besides, a round slot C is disposed respectively at two lateral faces of the connecting part A1 and A2 facing the pivotal connecting recess B for pivotally receiving a spindle 70 of those of the connecting block 60. Therefore, as shown in FIG. 3, in virtue of the dual-spindle 70 structure of the connecting block 60, each said connecting end of the modular assemblies 20, 30, 40 or 50 is pivotally connected to one of the spindle 70 of the corresponding connecting block 60.

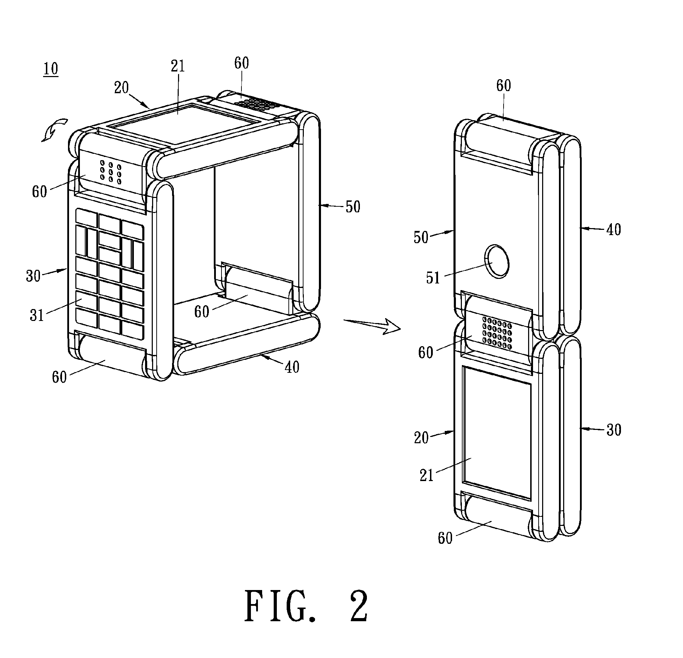

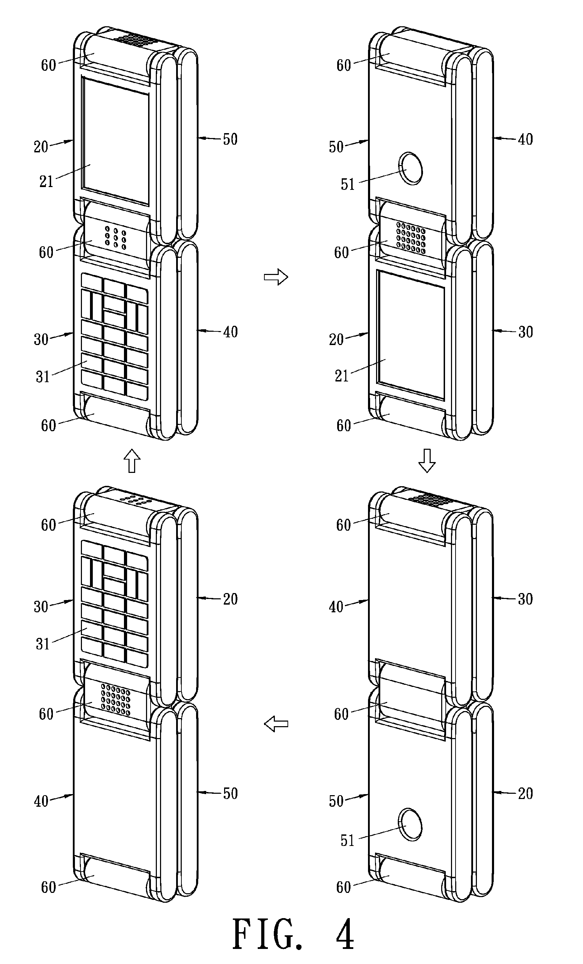

Accordingly, as shown in FIG. 3, after the two spindles 70 of each said connecting block 60 are connected pivotally to the respective pair of the connecting parts A1 and A2 of each two of the neighboring modular assemblies 20, 30, 40 and 50 respectively, the modular assembly 20, 30, 40, 50 and the four connecting blocks 60 jointly construct the parallelogrammic foldable cellphone 10 according to the preferred embodiment of the present invention. Such structure has following functions during usage:
1. As shown in FIGs. 1 and 2, the parallelogrammic foldable cellphone 10 of the present invention is capable of spreading and folding obversely or reversely, and thereby is changeable in the shape during usage.
   For example, the parallelogrammic foldable cellphone 10 can spread to become a parallelogrammic body or fold to become the shape of a general cellphone for easy handling and use of a user.
2. As shown in FIG. 4, the parallelogrammic foldable cellphone 10 of the present invention can fold continuously in the same direction to change the shape during usage.
3. The shape adaptability of the disclosed subject matter allows a designer to equip the parallelogrammic foldable cellphone 10 of the present invention with additional various uses and functions.

For example, the connecting block 60 of the present invention may comprises a flexible flat cable disposed therein in addition to the foresaid two spindles 70 so that the connecting block 60 can be capable of performing voice receiving or transmitting functions. Alternatively, it is also possible to provide the connecting block 60 with a digital camera lens or a USB socket.

Otherwise, as shown in FIGs. 1 or 2, by folding the parallelogrammic foldable cellphone 10 obversely or reversely, the first modular assembly 20 can be positioned next to the second modular assembly 30 or to the fourth modular assembly 50 whereby the parallelogrammic foldable cellphone 10 may provide varied using modes.

For example, the first modular assembly 20 can be a cellphone display module having an information display function, and have a screen 21 for displaying input/output information. The second modular assembly 30 can be a cellphone mainframe module with an information transmitting/receiving function and have press-type or touch-type buttons 31 for controlling information inputting or outputting. Either the third modular assembly 40 or the fourth assembly 50 may be a power supply module, digital camera module, or any other affiliated electronic equipment module compatible with the parallelogrammic foldable cellphone 10, such as a memory module, a bluetooth module, a GPS module or a MP3 module.

In case that the third modular assembly 40 and the fourth modular assembly 50 are both power supply modules, the electricity capacity of the parallelogrammic foldable cellphone 10 is doubled, and thus allows the parallelogrammic foldable cellphone 10 a lengthened continues using duration.

In particular, when the fourth modular assembly 50 is a digital camera module with a lens 51, a user can see the taken picture at a screen 21 of the first modular assembly 20 of the parallelogrammic foldable cellphone 10 at the position as shown in FIG. 1. Otherwise, a user can see the self-portrait taken by himself at the screen 21 of the first modular assembly 20 of the parallelogrammic foldable cellphone 10 under the reversely folded position as shown in FIG. 2.

For omitting repeated description, the components used in the second or the third preferred embodiment are the same or substantially the same as those recited in the first preferred embodiment and are described with the same component notations, definitions and functions. Thus, the components used in the second or the third preferred embodiment that can be referred to the previous description will not be given unnecessary details.

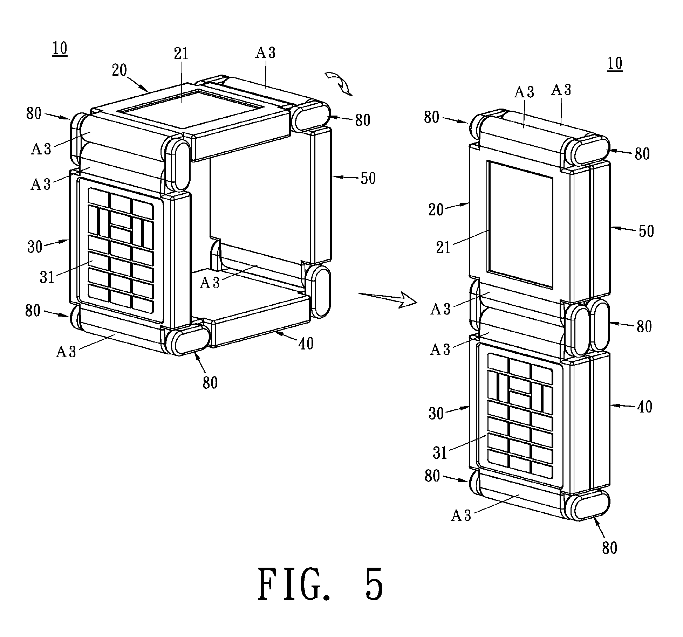

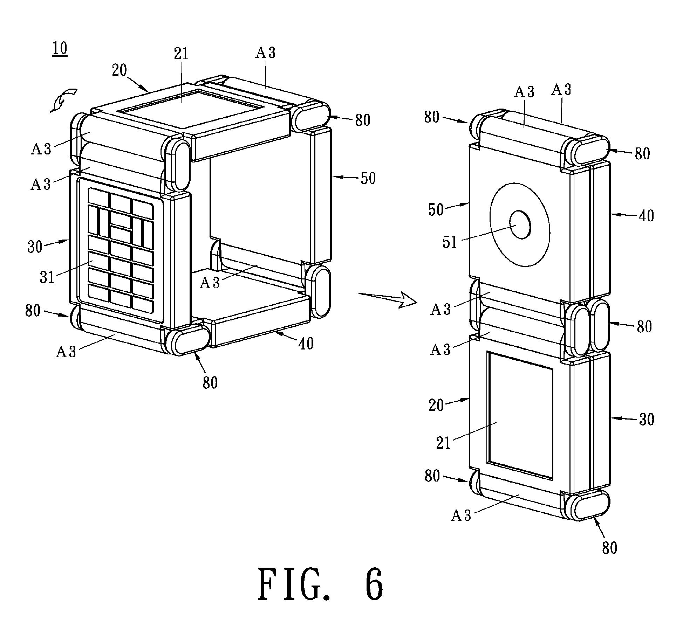

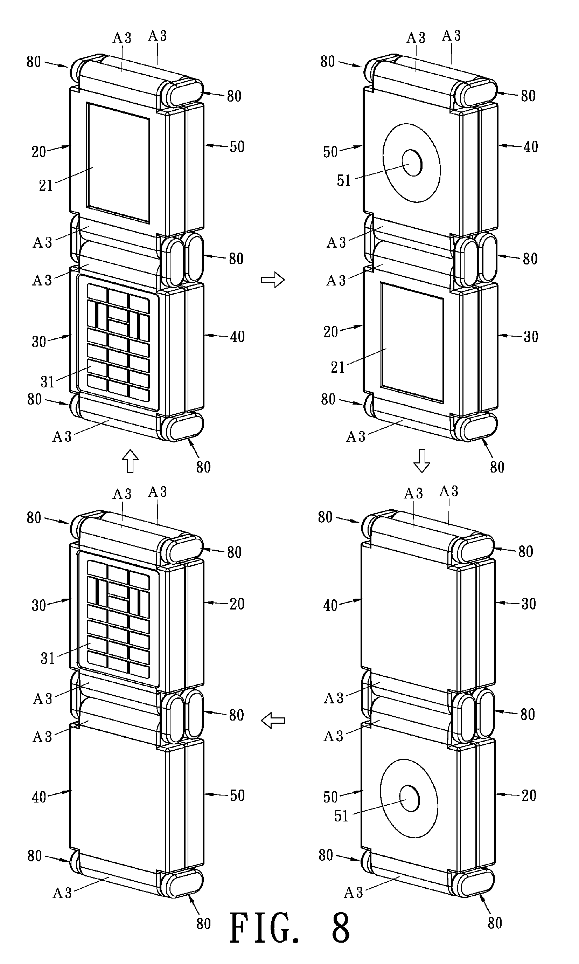

As shown from FIGs. 5 to 8, a parallelogrammic foldable cellphone 10 according to the second preferred embodiment of the present invention is composed of four modular assemblies and eight dual-axis hinges 80 jointed pivotally.

Wherein, each of the dual-axis hinges 80 has two parallel pivots 81. The four modular assemblies include a first modular assembly 20, a second modular assembly 30, a third modular assembly 40 and a fourth modular assembly 50. A protrudent connecting end is formed by protruding a pivotal connecting block A3 respectively on an upper side and a lower side of each said modular assembly 20, 30, 40 and 50. A round slot C is disposed respectively at two lateral faces of each of the connecting blocks A3 of the modular assemblies 20, 30, 40 and 50. Therefore, two lateral sides of each said connecting block A3 of the modular assemblies 20, 30, 40 and 50 can be respectively pivotally engaged by one of the pivots 81 of a said pair of the dual-axis hinges 80.

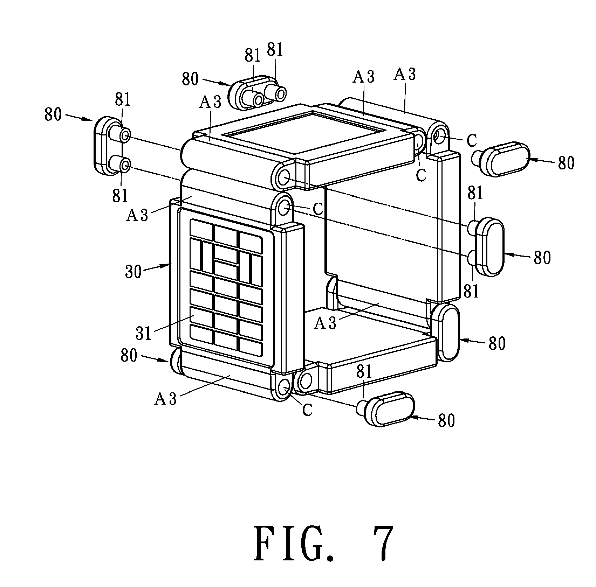

Accordingly, as shown in FIG. 7, after the eight dual-axis hinges 80 are pivotally connected respectively to each said two neighboring connecting blocks A3 of each pair of neighboring modular assemblies 20, 30, 40 and 50, the modular assemblies 20, 30, 40, 50 and the eight dual-axis hinges 80 are pivotally connected to construct the parallelogrammic foldable cellphone 10 of the present invention.

As shown from FIG. 5 to FIG. 8, the parallelogrammic foldable cellphone 10 can also fold obversely or reversely to change shape during usage and have the function as described in the first preferred embodiment.

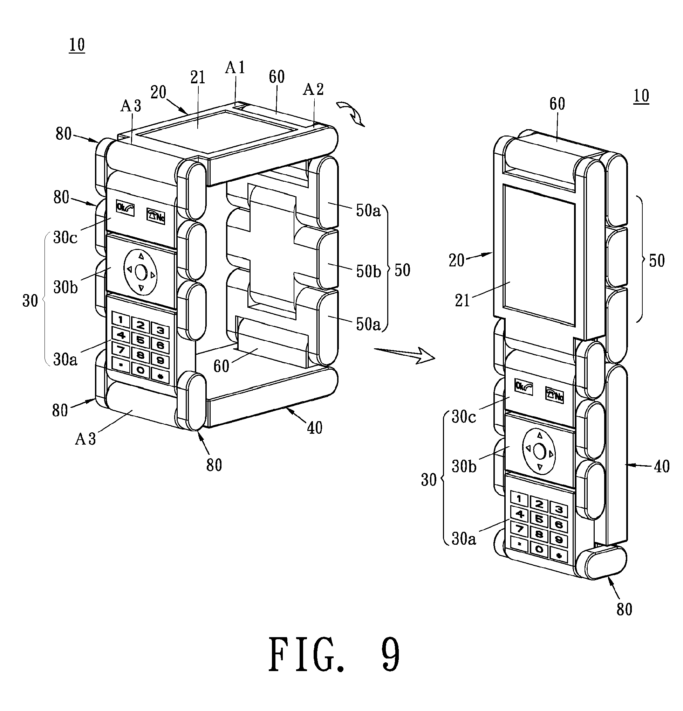

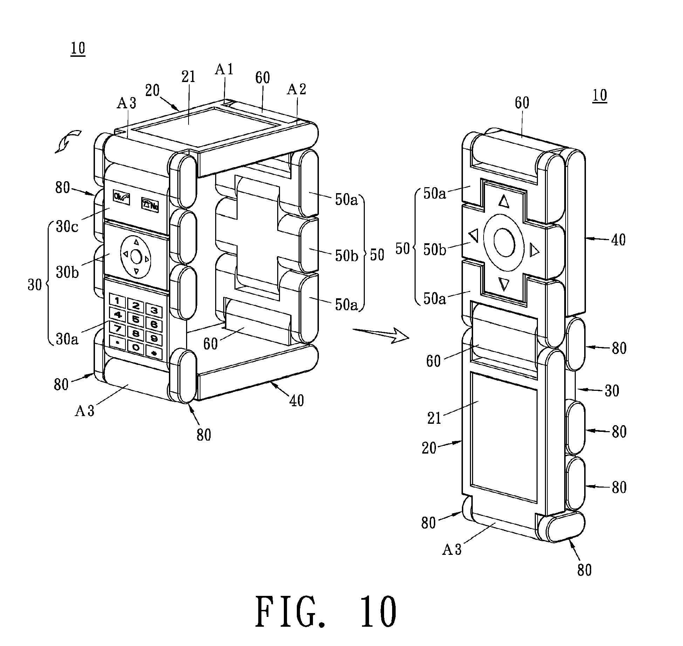

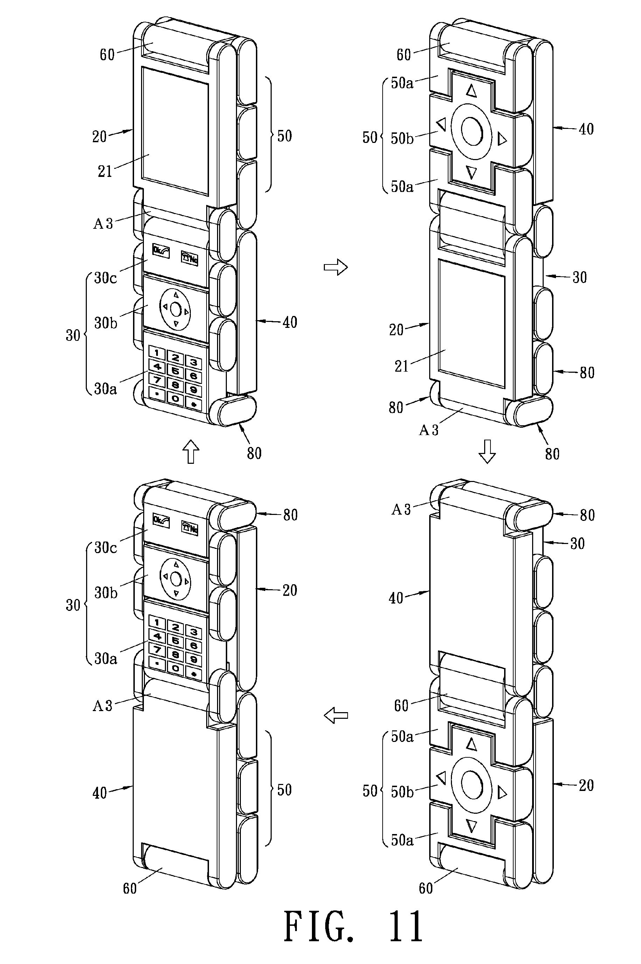

As shown from FIGs. 9 to 11, the basic structure of a parallelogrammic foldable cellphone 10 according to the third preferred embodiment of the present invention includes four modular assemblies, one or more connecting blocks 60 and two or more dual-axis hinges 80 pivotally connected.

As mentioned previously, the connecting block 60 has a dual-spindle 70 structure and the dual-axis hinge 80 has two parallel pivots 81. The four modular assemblies include a first modular assembly 20, a second modular assembly 30, a third modular assembly 40 and a fourth modular assembly 50. Each of the four modular assemblies has one side formed into a connecting end having a connecting recess B and a pair of pivotal connecting parts A1 and A2, while the opposite side is formed into another connecting end having a protrudent pivotal connecting block A3.

Accordingly, after the spindles 70 of each said connecting block 60 are respectively pivotally connected to the pairs of the pivotal connecting blocks A1 and A2 of the neighboring modular assemblies 20, 30, 40 and 50 respectively, while the dual-axis hinges 80 respectively pivotally connect the two neighboring pivotal connecting block A3 of each two of the neighboring modular assemblies 20, 30, 40 and 50, the modular assemblies 20, 30, 40, 50, the connecting blocks 60 and the dual-axis hinges 80 jointly construct the parallelogrammic foldable cellphone 10 according to the present invention.

In addition, as shown from FIGs. 9 to 11, each said first modular assembly 20, the second modular assembly 30, the third modular assembly 40 and the fourth modular assembly 50 can be constructed from a plurality of pivotally connected chain modules. For example, the second modular assembly 30 can be constructed from a button module 30a, a function switching module 30b and a signal receiving module 30c; the fourth modular assembly 50 can be constructed form two connecting block modules 50a and a function switching module 50b.

The above-mentioned parallelogrammic foldable cellphone 10 can also fold obversely or reversely to change the shape during usage and have the same functions as described in the first preferred embodiment.

## Claims

1. A parallelogrammic foldable cellphone comprising four modular assemblies (20, 30, 40, 50) and four connecting blocks (60) having two spindles (70) jointed pivotally, **characterized in that** a connecting end having a connecting recess (B) and a pair of pivotal connecting parts (A1, A2) is respectively disposed on upper side and lower side of each of the modular assemblies (20, 30, 40, 50), and the corresponding connecting recesses (B) of the neighboring connecting ends of each two neighboring modular assemblies (20, 30, 40, 50) cooperatively receive one of the connecting blocks (60) therein, and each spindle (70) of the connecting block (60) is pivotally connected to a pair of the pivotal connecting parts (A1, A2) of either of the two neighboring modular assemblies (20, 30, 40, 50); whereby each of the modular assemblies (20, 30, 40, 50) is capably positioned back to back with respect to either of the neighboring modular assemblies (20, 30, 40, 50) pivotally connected at the upper or lower connecting end thereof.

2. The parallelogrammic foldable cellphone as cited in claim 1, **characterized in that** the four modular assemblies (20, 30, 40, 50) comprise one cellphone display module (20) with a screen (21) for displaying information, one cellphone mainframe module (30) with information receiving or transmitting function, and the other two modular assemblies (40, 50) are selected from one or two of the group consisting of a power supply module, a digital camera module with lens, a memory module, a bluetooth module, a GPS module and a MP3 module.

3. The parallelogrammic foldable cellphone as cited in claim 2, **characterized in that** the cellphone mainframe module (30) is provided with a press-type or touch-type button (31).

4. The parallelogrammic foldable cellphone as cited in claim 2 or 3, **characterized in that** the connecting block (60) is provided with a digital camera len or a USB socket.

5. A parallelogrammic foldable cellphone comprising four modular assemblies (20, 30, 40, 50) and eight dual-axis hinges (80), **characterized in that** each dual-axis hinge (80) has two parallel pivots (81); a pivotal connecting block (A3) is protruded respectively from the upper side and lower side of each modular assembly (20, 30, 40, 50); a round slot (C) is disposed respectively at two lateral faces of the pivotal connecting block (A3) for one of the pivots (81) of the each dual-axis hinge (80) to be disposed therein; and the pivots (81) of each dual-axis hinge (80) are respectively pivotally connected to the corresponding side of the pivotal connecting blocks (A3) of each two neighboring modular assemblies (20, 30, 40, 50); whereby each of the modular assemblies is capably positioned back to back with respect to either of the neighboring modular assemblies (20, 30, 40, 50) pivotally connected at the upper or lower connecting end thereof.

6. A parallelogrammic foldable cellphone comprising four modular assemblies, one or more connecting block (60) and two or more dual-axis hinges (80) for connecting pivotally, **characterized in that** each connecting block (60) has a dual-spindle (70) structure and each dual-axis hinge has two parallel pivots (81); a connecting end with a connecting recess (B) and a pair of pivotal connecting parts (A1, A2) is disposed on one side of each modular assembly (20, 30, 40, 50) while a connecting block (A3) is protruded from the opposite side of the modular assembly (20, 30, 40, 50); a round slot (C) is disposed respectively at two lateral faces of the pivotal connecting block (A3) for pivotally receiving one of the pivots (81) of one said dual-axis hinge (80); the corresponding connecting recesses (B) of the neighboring connecting ends of each two neighboring modular assemblies (20, 30, 40, 50) cooperatively receive one of the connecting blocks (60) therein, and each spindle (70) of the connecting block (60) is pivotally connected to a pair of the pivotal connecting parts (A1, A2) of one of the two neighboring modular assemblies (20, 30, 40, 50), and the pivots (81) of each dual-axis hinge (80) are respectively pivotally connected to the corresponding side of the pivotal connecting blocks (A3) of each two of the neighboring modular assemblies (20, 30, 40, 50); whereby each of the modular assemblies (20, 30, 40, 50) is capably positioned back to back with respect to either of the neighboring modular assemblies (20, 30, 40, 50) pivotally connected at the upper or lower connecting end thereof.

7. The parallelogrammic foldable cellphone as cited in claim 6, **characterized in that** one of the four modular assemblies (20, 30, 40, 50) is constructed by a plurality of pivotally connected chain modules.
